# EUROPEAN PATENT SPECIFICATION

(11) **EP 3 790 787 B1**
(45) Date of publication and mention of the grant of the patent: **09.03.2022**
(21) Application number: 19723505.4
(22) Date of filing: 06.05.2019
(51) Int. Cl.: B62K 5/10, B62K 13/04, B62K 5/08

(54) **TILTING MOTOR VEHICLE WITH THREE OR FOUR-WHEELS, AND KIT FOR CONVERTING A TWO-WHEELED MOTOR VEHICLE INTO A THREE -WHEELED MOTOR VEHICLE**
KIPPMOTORFAHRZEUG MIT DREI ODER VIER RÄDERN UND KIT ZUR UMWANDLUNG EINES ZWEIRÄDRIGEN KRAFTFAHRZEUGS IN EIN DREIRÄDRIGES KRAFTFAHRZEUG
VÉHICULE AUTOMOBILE BASCULANT À TROIS OU QUATRE ROUES, ET KIT DE CONVERSION D'UN VÉHICULE AUTOMOBILE À DEUX ROUES EN UN VÉHICULE AUTOMOBILE À TROIS ROUES

(30) Priority: 09.05.2018 IT 201800005198
(43) Date of publication of application: 17.03.2021
(73) Proprietor: Piaggio & C. S.P.A., 56025 Pontedera Pisa (IT)
(72) Inventor: RAFFAELLI, Andrea, 56025 Pontedera, Pisa (IT)
(74) Representative: Zanettin, Gianluigi
(86) International application number: PCT/IB2019/053681
(87) International publication number: WO 2019/215576

(56) References cited:
- FR-A1- 3 018 765
- US-A- 2 493 817
- US-A1- 2017 021 891

## Description

### FIELD OF APPLICATION

The present invention relates to a three-or four-wheeled tilting motor vehicle and a kit for converting a two-wheeled motor vehicle into a three-wheeled motor vehicle.

In particular, the motor vehicle according to the invention may be a motor vehicle equipped with two steering and tilting wheels at the front and a fixed axle drive wheel at the rear.

### STATE OF THE ART

Generally, the frame of a motor vehicle is made in one piece as it must comply with specific dimensional tolerances.

From a production point of view, this significantly limits the possibilities of creating a modular frame that can be used regardless in different models of motor vehicles by varying some specific, removable structural components.

A modular frame could be adopted as a common base in the construction of a two-wheeled motor vehicle and a tilting three-wheeled motor vehicle (with two front wheels), by providing it with a removable forecarriage component, variable depending on the type of forecarriage. This would simplify the production process, opening up the possibility of retrofitting a two-wheeled motor vehicle to make it into a three-wheeled motor vehicle and vice versa.

In particular, it would be productively meaningful to construct a three- or four-wheeled tilting motor vehicle, with two front wheels, using a base frame of a two-wheeled motor vehicle and varying only one forecarriage component.

From a production point of view, making a modular frame by using a removable structural element is complex since it requires:
- comparable construction accuracy to a one-piece frame in terms of tolerance; and
- ease of assembly, given that the additional (removable) structural part must be able to be mounted and fastened to the base frame quickly, respecting the times of a production line and without unduly complicating any retrofitting.

In the specific case of the construction of a three- or four-wheeled tilting motor vehicle from a base frame of a two-wheeled motor vehicle, the removable forecarriage component must also meet the following specifications:
- increase the rigidity of the base frame, to enable it to withstand the stresses of a tilting motor vehicle; and
- not require tolerances stricter than the general tolerances of the base frame design.

To date, a tilting three-wheeled motor vehicle (with two front wheels) made from a modular frame shared with a two-wheeled motor vehicle is not known of in the art. Document FR3018765A1 shows the preamble of claims 1 and 12.

### PRESENTATION OF THE INVENTION

In the light of the above, there is therefore a need in the motor vehicle manufacturing sector to construct a tilting three-wheeled motor vehicle (with two front wheels) with a modular frame shared with a two-wheeled motor vehicle, which meets entirely or at least in part the above requirements.

Such requirement is satisfied by a three- or four-wheeled tilting motor vehicle according to claim 1 and by a kit for converting a two-wheeled motor vehicle into a three-wheeled motor vehicle according to claim 12.

### DESCRIPTION OF THE DRAWINGS

Further characteristics and advantages of the present invention will be more clearly comprehensible from the description given below of its preferred and nonlimiting embodiments, wherein:
- figure 1 shows a schematic, lateral, perspective view of a frame of a three- or four-wheeled tilting motor vehicle according to one embodiment of the present invention, equipped with a forecarriage support frame complete with two tilting front wheels;
- figure 2 shows a schematic, front perspective view of the frame in figure 1;
- figures 3 and 4 respectively show a schematic, lateral, perspective view and a schematic, front , lateral perspective view of the frame in figure 1, illustrated without the two front wheels;
- figure 5 shows a schematic, lateral orthogonal view of the frame in figure 3;
- figures 6, 7 and 8 each show a schematic, lateral, orthogonal view of a frame of a three- or four-wheeled tilting motor vehicle according to three different alternative embodiments of the present invention, the frame being provided with a forecarriage support frame, illustrated without the two front tilting wheels;
- figure 9 shows a schematic, cross-section view of a detail of the two embodiments illustrated in figures 5 and 8, relative to an end joint suitable to connect a second portion of a forecarriage support frame to a steering column of the motor vehicle; and
- figure 10 shows a schematic ,cross-section view of a detail of the embodiment illustrated in figure 7, relative to an end joint suitable to connect a second portion of a forecarriage support frame to a steering column of the motor vehicle.

The elements or parts of elements common to the embodiments described below will be indicated using the same reference numerals.

### DETAILED DESCRIPTION

With reference to the aforementioned figures, reference numeral 1 globally denotes a three- or four-wheeled tilting motor vehicle according to the present invention.

For the purposes of the present invention, it should be pointed out that the term motor vehicle should be considered in a broad sense, encompassing any motorcycle having at least three wheels, i.e. two front wheels, as described better below and at least one rear wheel. Such definition therefore also comprises so-called quad bikes having two wheels on the forecarriage and two wheels on the rear.

According to a general embodiment, the three or four wheeled tilting motor vehicle 1 has at least two front wheels 10', 10".

The tilting motor vehicle 1 comprises a frame 6 extending from a forecarriage 8 supporting the pair of front wheels 10, 10", to a rear 12 which supports one or more rear wheels (not shown).

It is possible to distinguish a left front wheel 10' and a right front wheel 10" in which the definition of left and right wheel 10', 10" is purely formal and means in relation to a driver of the vehicle. Said wheels are arranged to the left and right of the centreline plane M-M of the motor vehicle, compared to a point of observation of a driver driving it.

For the purposes of the present invention, the frame 6 of the motor vehicle may be any shape, size and may for example be of the lattice type, box type, cradle, single or double, and so forth. The frame 6 of the motor vehicle can be in one piece or in multiple parts; for example the frame 6 of the motor vehicle interconnects with a rear frame 13 which may comprise an oscillating rear fork (not shown) which supports one or more rear drive wheels (not shown). The aforesaid rear oscillating fork may be connected to the frame 6 by direct hinging or by the interposition of a lever mechanism and/or intermediate frames.

Preferably, the aforementioned frame 6 is a frame also utilisable for making a two-wheeled motor vehicle.

The forecarriage 8 of the motor vehicle 1 comprises a forecarriage frame 20 to which the two front wheels 10' and 10'' are connected.

Advantageously, the two front wheels 10', 10" are kinematically connected to each other and to the forecarriage support frame 20 by means of a tilting kinematic mechanism 40 which enables the same to tilt and/or steer, in particular in a synchronous manner. The aforementioned tilting kinematic mechanism 40 can have any configuration as long as it is preferably functional to enable the front wheels to tilt and/or steer, in particular in a synchronous manner.

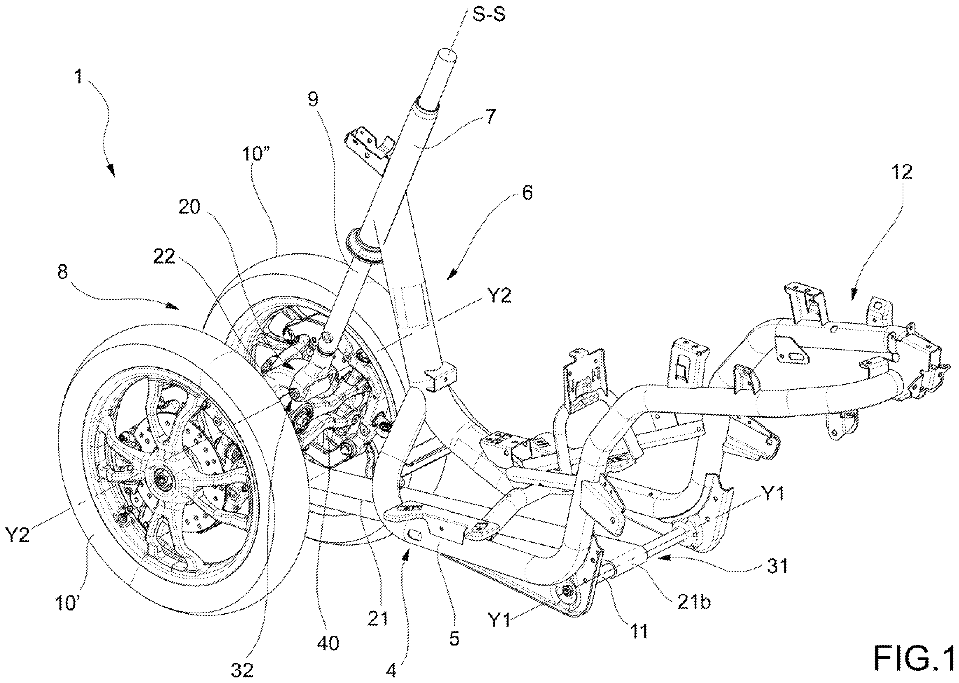

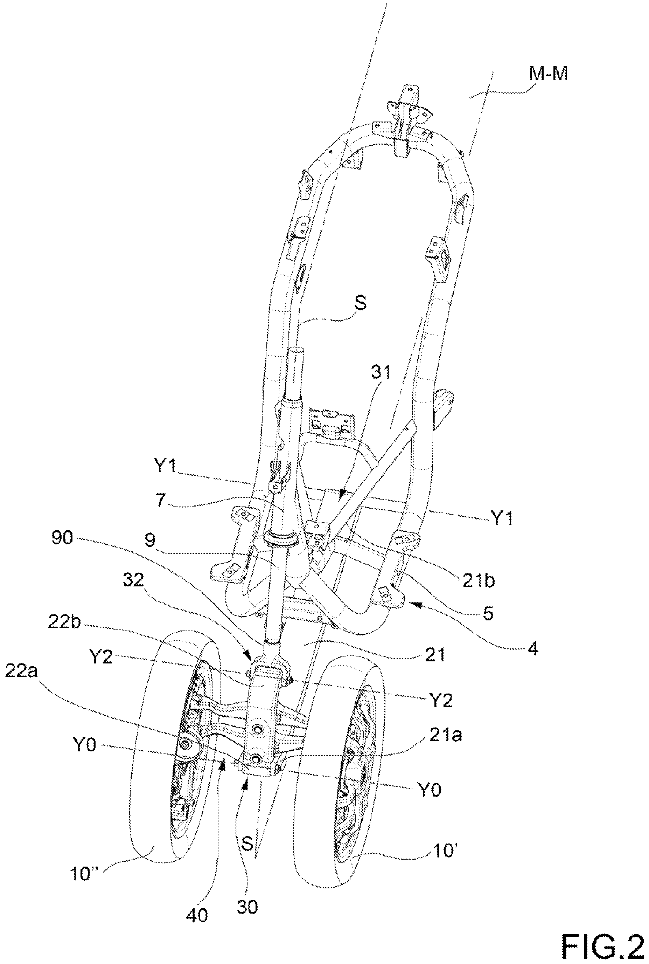

Preferably, as illustrated in particular in figures 1 and 2, the tilting kinematic mechanism 40 is an articulated quadrilateral system. In particular, the tilting kinematic mechanism 40 is configured to be enclosed in height in the volume of the wheels.

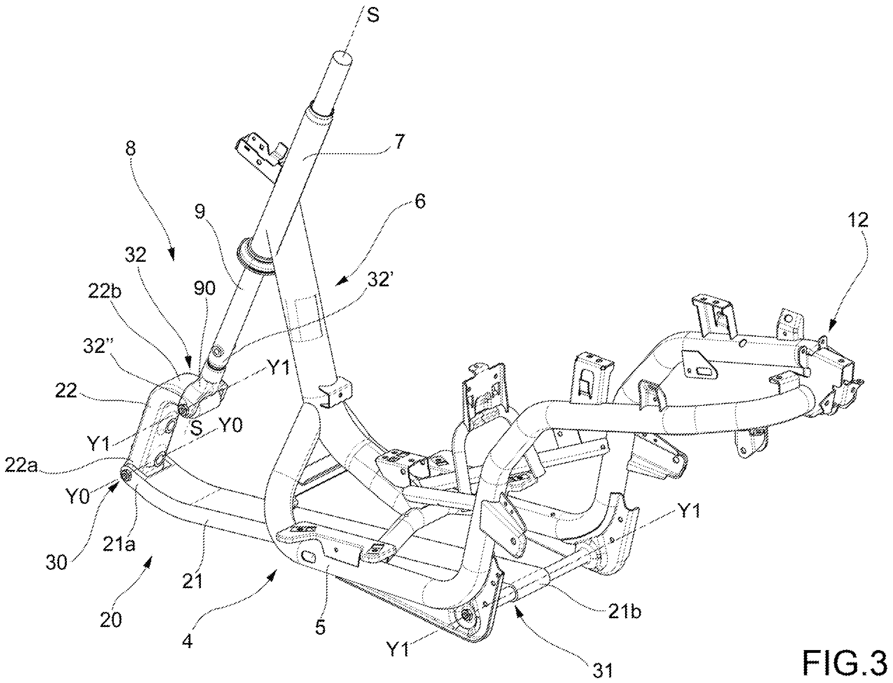

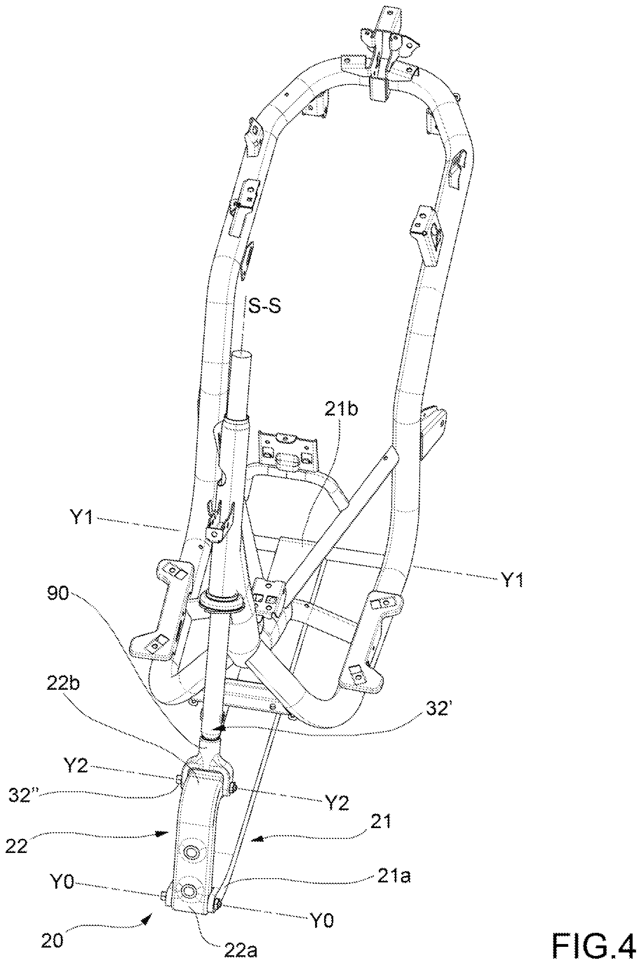

According to the embodiments illustrated in the appended figures, and in particular with reference to figures 3 and 4, the aforementioned forecarriage support frame 20 is defined by an articulated structure comprising a first portion 21 and a second portion 22 which:
- are connected to each other at their first ends 21a, 22a by means of an intermediate joint 30; and;
- are connected directly or indirectly to the aforesaid frame 6 at their second ends 21b, 22b by means of respective end joints 31, 32.

The aforesaid intermediate joint 30 and the aforesaid two end joints 31, 32 each define at least one articulation axis Y0, Y1, Y2 orthogonal to a centreline plane M-M of the motor vehicle 1. The articulation axes Y0, Y1 and Y2 of the three joints 30, 31 and 32 are thus parallel to each other.

Functionally, the aforementioned articulated structure forms a structure kinematically corresponding to a three-hinged arch (degenerate).

A "three hinged arch" means an isostatic structure in which the constraints (i.e. the hinges) are not aligned with each other. In the event that the constraints were aligned, one would speak of an aligned three-hinged arch.

Thanks to the fact that the forecarriage support frame 20 is made as described above, namely, that is in extreme synthesis, as an articulated structure which connected to the frame 6 kinematically corresponds to a three-hinged arch (degenerate), the following technical effects are obtained simultaneously:
- stability of the structure itself, linked to the isostatic nature of the three-hinged arch;
- adaptability of the frame support frame 6, linked to the fact that, before being connected to the frame 6, the shape of the forecarriage support frame can be changed since it is articulated and not yet rigid; and
- ease and speed of assembly and disassembly to the frame 6, since the connection to the frame 6 can be made in only two points at the end joints 31 and 32.

Furthermore, thanks to the fact that the articulated structure is adaptable during assembly, it can easily be connected to the frame 6 at specific reference points, previously chosen so as to ensure constructive accuracy in terms of tolerance, comparable to a one-piece frame.

Advantageously, the isostatic nature of the forecarriage support frame (understood as the absence of lability) is ensured by the fact that at least one of the aforementioned two end joints 31, 32 consists of a revolute joint, wherein a revolute joint is understood as a hinge that allows rotation around its hinge axis only.

Preferably, the aforementioned forecarriage support frame 20 is made of metal material.

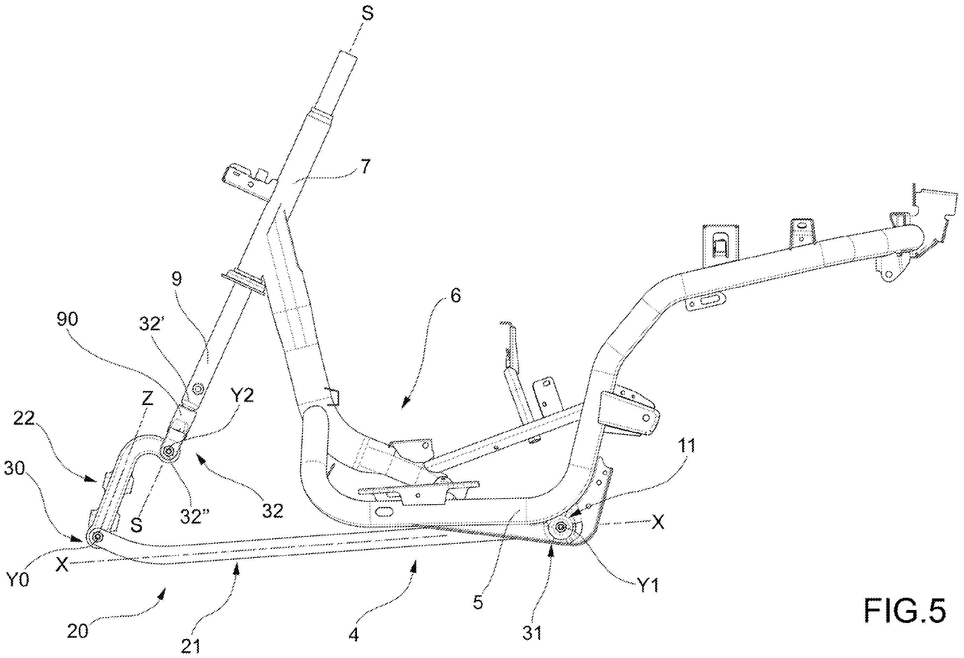

According to a particular embodiment, illustrated in figures 5, 7 and 8, which will be described in detail below, only one of the aforementioned end joints 31 consists of a revolute joint, while the other end joint 32 may be a spherical joint or a joint equivalent to a spherical joint. In this case, the intermediate joint 30 may be a revolute joint or a spherical joint or a joint equivalent to a spherical joint.

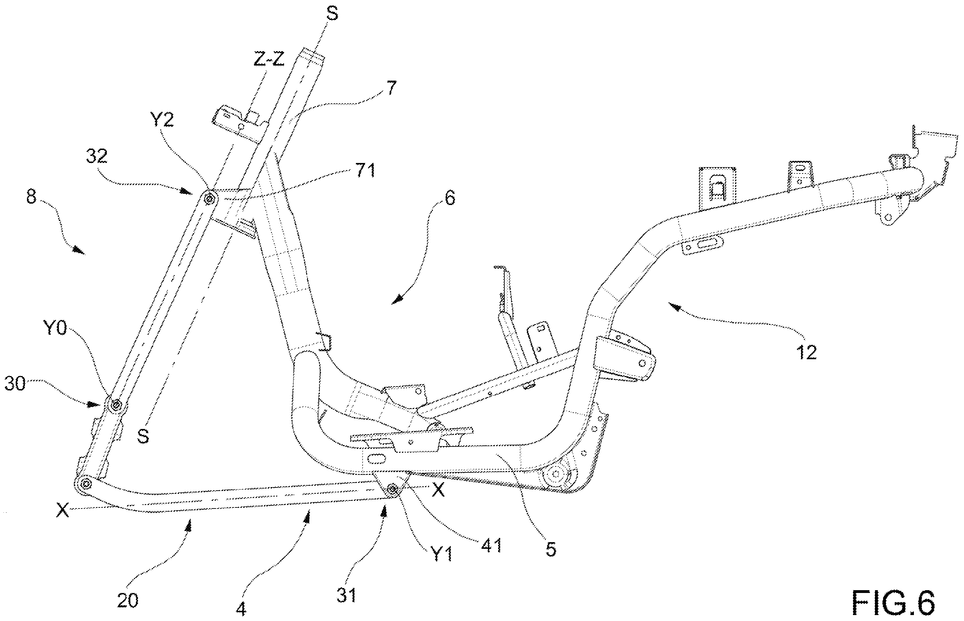

According to a particular alternative embodiment, illustrated in figure 6, which will be described in detail below, both said end joints 31, 32 and the intermediate joint 30 may consist of revolute joints. Advantageously, such revolute joints can be made as bolt couplings.

Operatively, with respect to the case in which all the joints of the articulated structure are made as revolute joints, in the case in which at least one joint is made as a spherical joint or a joint equivalent to a spherical joint, it is possible to change the mutual orientation between the first portion 21 and the second portion 22 of the articulated structure in space, and not just parallel to the centreline plane M-M of the motor vehicle. At least one of the two portions 22 can in fact be positioned with an axis tilted with respect to the centreline plane M-M compensating for positioning errors between the connection points to the frame 6. This increases the adaptability of the forecarriage support frame 20, further facilitating its assembly.

Preferably, according to the embodiments illustrated in the attached figures, the aforementioned forecarriage support frame 20 is connected to the frame 6 so as to form therewith a closed structure near the forecarriage 8. In this way, thanks to the forecarriage support frame, the rigidity of said frame 6 is increased. In the preferred case wherein the frame 6 can be used to make a two-wheeled motor vehicle, or even it is a frame specifically configured to make a two-wheeled motor vehicle, the increased rigidity given by the forecarriage support frame 20 makes the frame 6 better able to withstand the stresses of a tilting motor vehicle with two front wheels.

Advantageously, the aforementioned first portion 21 of the articulated structure extends at least in part on the bottom 4 of the motor vehicle 1 in a main direction X (fig.5) which is substantially horizontal, generally understood as the front-back direction of extension of the motor vehicle 1.

Preferably, as illustrated in the attached figures, and in particular in figure 2, the aforementioned main extension direction X of the first portion 21 is coplanar with the centreline plane M-M of the motor vehicle, and incident to a steering axle S-S of the motor vehicle 1.

According to the embodiments illustrated in the attached figures, the aforementioned first portion 21 with a substantially horizontal extension constitutes the main part of the articulated structure and mainly bears the loads along the front-back direction of extension of the motor vehicle 1 due to braking and to yawing for asymmetrical loads entering from the front wheels 10 'and 10".

Advantageously, the aforementioned second portion 22 of the articulated structure extends at least in part in a main direction Z substantially parallel to a steering axle S-S of the motor vehicle 1. As will be discussed below, preferably, said second portion 22 is connected to a steering column 9 or to a steering sleeve 7 of the motor vehicle 1 and mainly supports the symmetrical vertical loads.

Preferably, the aforementioned closed structure extends symmetrically with respect to the centreline plane M-M of the motor vehicle 1, this meaning that both the first portion 21 and the second portion 22 of the articulated structure have their own plane of symmetry which is coplanar to the centreline plane M-M of the motor vehicle 1. In this way, the aforementioned closed structure is able to absorb and distribute stresses in a more balanced manner.

However, alternative embodiments may be provided (not illustrated in the attached figures) in which the aforementioned closed structure does not extend symmetrically with respect to the centreline plane M-M of the motor vehicle 1.

As illustrated in the attached figures, the frame 6 defines a platform 5 of the motor vehicle 1. In particular, the platform 5 can be made by means of a tubular frame, which extends symmetrically with respect to the centreline plane M-M of the motor vehicle 1.

Preferably, the forecarriage support frame 20 is directly connected to the frame 6 at the platform 5 with the first portion 21 of the articulated structure by means of the respective end joint 31.

According to the embodiments illustrated in the appended figures, the end joint 31 of the first portion 21 is a revolute joint, connected to anchoring points 41 (fig.6) of the platform specifically dedicated for the purpose or dedicated to further connect a motor to the frame 6. Advantageously, such revolute joint can be made with a bolt coupling.

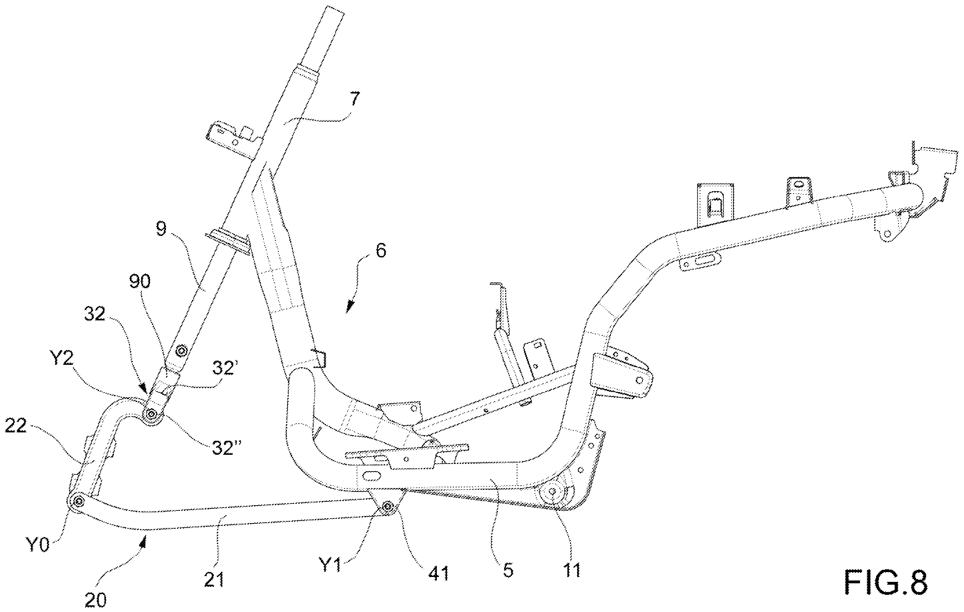

Advantageously, such anchoring points 41 specifically dedicated to the connection with the forecarriage support frame 20 are a standard component of the frame 6 of the motor vehicle or can be arranged on the frame 6 during the assembly of the forecarriage support frame 20 to the frame 6. Such anchoring points 41 may be arranged at any point of the platform, as illustrated for example in figures 6 and 8.

Advantageously, the platform 5 may comprise a transverse pin 11 provided as an engine attachment, for example for an oscillating type motor. Preferably, such transverse pin 11 may be selected as an anchoring point for the end joint 31 of the first portion 21. The engine attachment axle 11 (if provided) is an excellent anchoring point of the forecarriage support frame since generally the position of this axle is chosen with an accurate tolerance with respect to other parts of the motor vehicle. This facilitates a dynamically more balanced assembly of the forecarriage support frame on the frame 6.

As illustrated in the accompanying figures, the frame 6 defines a steering sleeve 7 i.e. the portion of the frame intended to support a steering column 9 along the steering axle S-S of the vehicle. Generally, the steering sleeve 7 is diametrically crossed by the centreline plane M-M of the motor vehicle 1.

According to the embodiment illustrated in figure 6, the forecarriage support frame 20 can be connected directly to the frame 6 at the aforementioned steering sleeve 7 with the second portion 22 of the articulated structure by means of the respective end joint 32.

Similarly to the engine attachment axle 11 (if provided), the steering sleeve 7 is also an excellent anchoring point for the forecarriage support frame, since, as already shown, the steering sleeve 7 is made in a very precise position with respect to the centreline plane M-M of the motor vehicle, chosen with an accurate tolerance with respect to other parts of the motor vehicle. This facilitates a dynamically more balanced assembly of the forecarriage support frame on the frame 6.

As illustrated in figure 6, the connection to the steering sleeve 7 is made at an anchoring point 71 that is obtained outside said sleeve and is specifically dedicated to the connection with the forecarriage support frame.

Similarly to the anchoring point 41 on the platform 5, the anchoring point 71 specifically dedicated to the connection with the forecarriage support frame 20 may also be a standard component of the frame 6 of the motor vehicle or may be arranged on the frame 6 during the assembly of the forecarriage support frame 20 to the frame 6.

According to the embodiment illustrated in figure 6, the end joint 32 of the second portion 22 is a revolute joint, connected to the aforesaid anchoring point 71 on the steering sleeve 7. Advantageously, such revolute joint can be made with a bolt coupling. Alternatively, such a revolute joint may be replaced by a spherical joint or by a joint equivalent to a spherical joint.

As illustrated in particular in figures 5, 7 and 8, the motor vehicle 1 comprises a steering column 9 inserted in the steering sleeve 7 defined by the frame 6, along the steering axle S-S.

According to the embodiments illustrated in figures 5, 7 and 8, the forecarriage support frame 20 can be connected indirectly to the frame 6 with the second portion 22 of the aforementioned articulated structure connected to the steering column 9 by means of the respective end joint 32. In this case, the end joint 32 is suitable to kinematically decouple the second portion 22 from the rotational movements of the steering column 9 about the steering axis S-S.

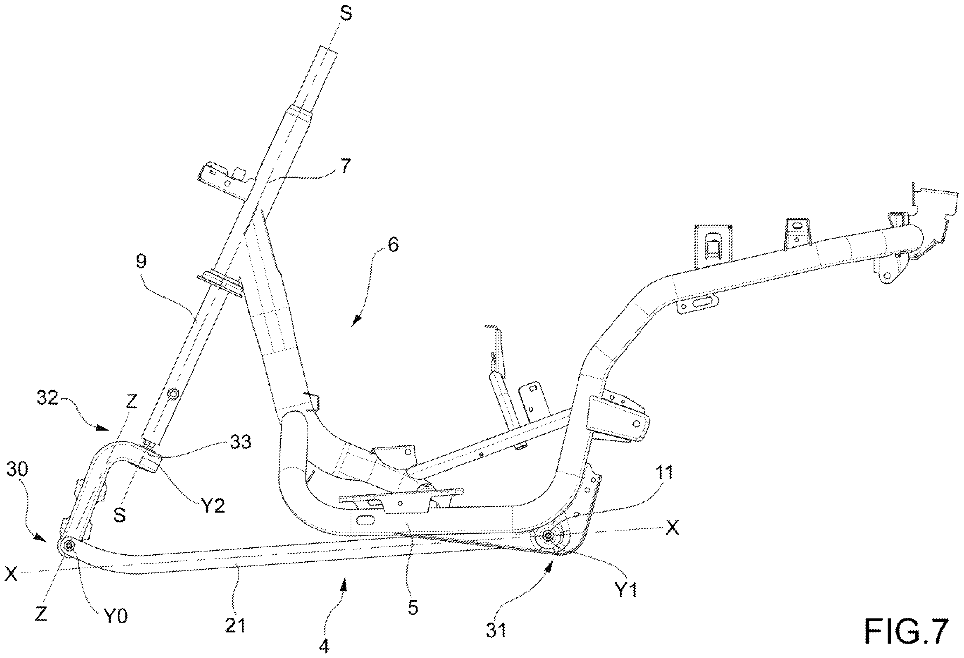

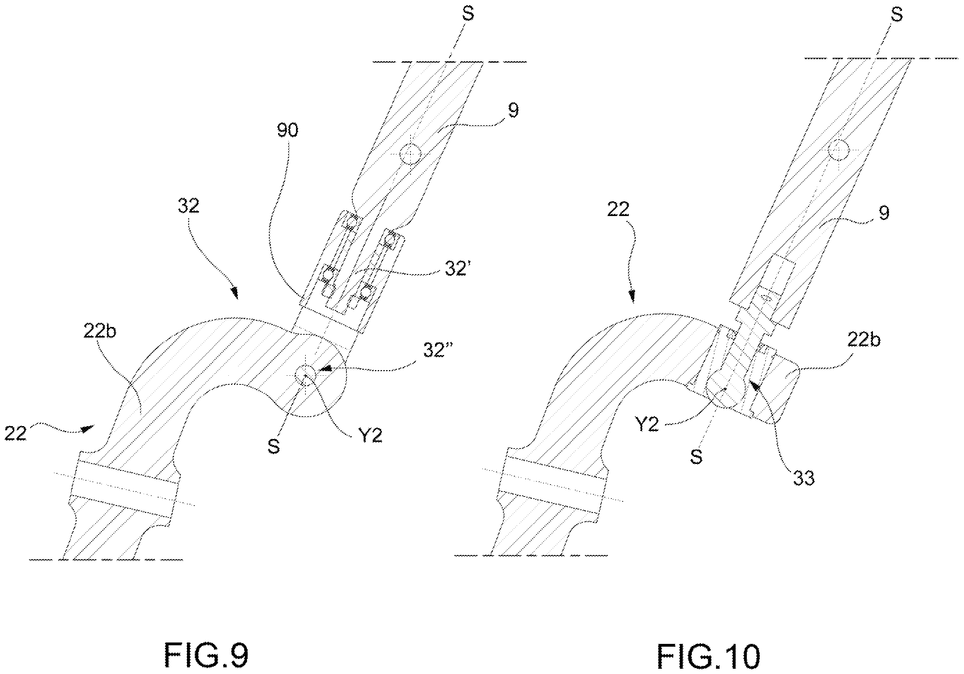

In particular, as illustrated in figures 7 and 10, the end joint 32 may consist of a spherical joint 33.

Alternatively, as shown in figures 5, 8 and 9, the end joint 32 consists of a revolute joint 32' which is connected to an element 90 in turn rotatably connected about the steering axle S-S of the steering column 9. More specifically, as illustrated in figure 9, the end joint 32 is defined by two incident axis hinges: a first hinge 32 'is directly associated with the steering column 9 and has a rotational axis corresponding to the steering axle S-S; a second hinge 32 "is directly associated with the second portion 22 of the articulated structure and has a rotational axis Y2 orthogonal to the centreline plane M-M of the motor vehicle 1. The second hinge 32" is made by a bolt coupling between the second portion 22 of the articulated structure and the aforesaid element 90 rotatably associated with the steering column 9.

Preferably, according to the embodiments illustrated in figures 5, 7 and 8, the connection of the articulated structure 20 to the frame 6 takes place respectively on the motor attachment axle 11 (if provided) and on a part of the frame 6 crossed by the steering axle (i.e. the steering sleeve 7 or alternatively the steering column 9). The reference between these parts (motor attachment and steering axle) has an accurate tolerance. Therefore, providing the articulated structure with attachments on the motor attachment axle and on the sleeve/ column ensures the correct assembly of the forecarriage support frame and, above all, ensures correct dynamic behaviour of the vehicle. In fact, an inaccurate installation could have effects on the driving of the vehicle and therefore on safety.

In general, the use of hinges (revolute joints and spherical or equivalent joints, where possible) also allows the assembly of the forecarriage support frame 20 compensating for any dimensional errors, for example of distance between the parts, while retaining the alignment between the motor attachment axle and the steering axle, without therefore affecting the dynamic behaviour of the motor vehicle 1.

The embodiment providing for attachment of the forecarriage support frame 20 to the motor attachment axle 11 and the steering column 9 is preferable as regards production simplicity since it does not require machining of the post welding attachments of the frame 6. Otherwise, in the event of providing anchoring points on the platform other than the motor axle or on the steering sleeve, it becomes necessary to provide for specific operations for the provision of such attachments 41 and 71.

The object of the present invention is also a kit for converting a two-wheeled motor vehicle into a three-wheeled motor vehicle, of which two are front wheels.

In general, such a two-wheeled motor vehicle (not shown in its entirety in the appended drawings) comprises a frame extending from a forecarriage to a rear. Advantageously, the aforementioned frame may define a platform of the motor vehicle. In particular, the platform may comprise a transverse pin provided as an engine attachment, for example for an oscillating type motor.

The aforementioned frame defines a steering sleeve, which is intended to support a steering column along the steering axle of the vehicle. The two-wheeled motor vehicle further comprises a steering column inserted into the steering sleeve. Preferably, a support element for a front wheel is connected to the steering column, for example in the form of a support fork. Advantageously, such a support element is coaxially decouplable from the steering column.

The conversion kit comprises a forecarriage support frame 20 for a two-wheeled forecarriage, mountable on the frame of the two-wheeled motor vehicle, after disassembly of the forecarriage specific to that two-wheeled motor vehicle.

In particular, the aforementioned forecarriage support frame corresponds to the forecarriage support frame 20 already described in relation to the three- or four-wheeled tilting motor vehicle 1 according to the present invention.

For the description of the conversion kit, the same numerical references already used to describe the three-wheeled tilting motor vehicle 1 will therefore be used and reference will also be made to the same figures, which, according to a preferred form of application of the invention, represent a three-wheeled motor vehicle 1 obtained by conversion of a two-wheeled motor vehicle using the conversion kit according to the invention. In the rest of the description, the frame of the two-wheeled motor vehicle will correspond to the frame 6 of the three-wheeled tilting motor vehicle 1 described above.

More specifically, the aforesaid forecarriage support frame 20 is defined by an articulated structure comprising a first 21 and a second portion 22, which can be connected to each other at their first ends 21a, 22a by means of an intermediate joint 30 and can be connected directly or indirectly to the frame 6 of the motor vehicle at their second ends 21b, 22b by means of respective end joints 31, 32.

The aforesaid forecarriage support frame 20 is intended to be mounted on the frame 6 so that the intermediate joint 30 and the aforesaid two end joints 31, 32 each define at least one articulation axis Y0, Y1, Y2 orthogonal to a centreline plane M-M of the motor vehicle. The articulation axes Y0, Y1 and Y2 of the three joints 30, 31 and 32 are thus parallel to each other.

Operatively, once the aforementioned articulated structure has been assembled it forms a structure kinematically corresponding to a three-hinged arch, according to the definition already provided above.

Preferably, the forecarriage support frame 20 can be directly connected to the frame 6 at the aforementioned platform 5 with the first portion 21 of the articulated structure by means of the respective end joint 31.

According to the embodiments illustrated in the appended figures, the end joint 31 of the first portion 21 is a revolute joint, which can be connected to anchoring points 41 of the platform specifically dedicated for the purpose or dedicated to further connect a motor to the frame 6. Advantageously, such revolute joint can be made with a bolt coupling.

Operatively, such anchor points 41 specifically dedicated to connection with the forecarriage support frame 20 may be a standard component of the motor vehicle frame 6 or may be arranged on the frame 6 during assembly of the forecarriage support frame 20 to the frame 6. Preferably, the transverse motor heel pin 11 (if provided) may be chosen as the anchoring point to the platform.

According to the embodiment illustrated in figure 6, the forecarriage support frame 20 can be connected directly to the frame 6 at the aforementioned steering sleeve 7 with the second portion 22 of the articulated structure by means of the respective end joint 32.

Preferably, as illustrated in figure 6, the connection to the steering sleeve 7 is made at an anchoring point 71 that is obtained outside said sleeve and is specifically dedicated to the connection with the forecarriage support frame.

Similarly to the anchoring point 41 on the platform 5, the anchoring point 71 specifically dedicated to the connection with the forecarriage support frame 20 may also be a standard component of the frame 6 of the motor vehicle or may be arranged on the frame 6 during the assembly of the forecarriage support frame 20 to the frame 6.

According to the embodiment illustrated in figure 6, the end joint 32 of the second portion 22 is a revolute joint, which can be connected to said anchoring point 71 on the steering sleeve 70. Advantageously, such revolute joint can be made with a bolt coupling. Alternatively, such a revolute joint may be replaced by a spherical joint or by a joint equivalent to a spherical joint.

According to the embodiments illustrated in figures 5, 7 and 8, the forecarriage support frame 20 can be connected indirectly to the frame 6 with the second portion 22 of the aforementioned articulated structure connected to the steering column 9 by means of the respective end joint 32. In this case, the end joint 32 is suitable to kinematically decouple the second portion 22 from the rotational movements of the steering column 9 about the steering axis S-S.

Operatively, this connection can be made after disassembly from the column 9 of the support element of the single front wheel, consisting for example of a fork element.

In particular, as illustrated in figures 7 and 10, the end joint 32 may consist of a spherical joint 33.

Alternatively, as illustrated in figures 5, 8 and 9, the end joint 32 may consist of a revolute joint 32 ', which is connected to an element 90 in turn rotatably connected about the steering axle S-S of the steering column 9.

Regarding the technical effects obtainable from the aforementioned conversion kit, the same considerations apply already made in relation to the three-wheeled tilting vehicle 1 and which, for brevity of exposure, will not be repeated here.

It should be observed only that the forecarriage support frame 20 can be disassembled into the two portions 21 and 22, disassembling the intermediate joint 30. This facilitates the transport of the conversion kit.

As may be appreciated from the description, the present invention makes it possible to overcome the drawbacks mentioned of the prior art.

A person skilled in the art may make numerous modifications and variations to the tilting motor vehicle with three or four wheels and to the method for blocking the tilting movements of a tilting motor vehicle with three or four wheels described above so as to satisfy contingent and specific requirements while remaining within the invention as defined by the following claims .

## Claims

1. Tilting motor vehicle with three or four-wheels, of which at least two front wheels (10 ', 10 "), comprising a frame (6) extending from a forecarriage (8), which supports a pair of front wheels (10', 10 "), to a rear (12), which supports one or more rear wheels, said forecarriage (8) in turn comprising a forecarriage support frame (20),
wherein said forecarriage support frame (20) is defined by an articulated structure comprising a first (21) and a second portion (22), which are connected to each other at their own first ends (21a, 22a) by means of an intermediate joint (30) **characterized in that** they are connected directly or indirectly to said frame (6) at their own second ends (21b, 22b) by means of respective end joints (31, 32),
and wherein said intermediate joint (30) and said two end joints (31, 32) each define at least one articulation axes (Y0, Y1, Y2) orthogonal to a centreline plane (M-M) of said motor vehicle (1), said articulated structure forming a structure corresponding kinematically to a three-hinged arch.

2. Motor vehicle according to claim 1, wherein at least one of said end joints (31, 32) is a revolute joint.

3. Motor vehicle according to claim 2, wherein only of said end joints (31) is a revolute joint, while the other end joint (32) is a spherical joint or a joint equivalent to a spherical joint, the intermediate joint (30) being a revolute joint or a spherical joint or a joint equivalent to a spherical joint, or wherein both said end joints (31, 32) and the intermediate joint (30) are revolute joints.

4. Motor vehicle according to one or more of the previous claims, wherein said forecarriage support frame (20) is connected to said frame (6) so as to form with said frame (6) a closed structure near the forecarriage (8), increasing the rigidity of the frame (6) itself, wherein preferably said closed structure develops symmetrically with respect to the centreline plane (M-M) of the motor vehicle.

5. Motor vehicle according to one or more of the previous claims, wherein said first portion (21) extends at least in part on a bottom (4) of the motor vehicle in a first prevailing direction (X) which is substantially horizontal.

6. Motor vehicle according one or more of the previous claims, wherein said second portion (22) extends at least in part according to a second prevailing direction (Z) substantially parallel to a steering axis (S-S) of said motor vehicle (1).

7. Motor vehicle according to one or more of the previous claims, wherein said frame (6) is a frame that can also be used for realizing a two-wheeled motor vehicle.

8. Motor vehicle according to one or more of the previous claims, wherein said frame (6) defines a platform (5) of said motor vehicle (1) and wherein said forecarriage support frame (20) is connected directly to said frame (6) with the first portion (21) of said articulated structure by means of the respective end joint (31) in correspondence of said platform (5), wherein in particular the end joint (31) of said first portion (21) is a revolute joint, connected to anchoring points (41) of the platform specifically dedicated for the purpose or dedicated to further connect a motor to the frame (6).

9. Motor vehicle according to one or more of the previous claims, wherein said frame (6) defines a steering sleeve (7) and wherein said forecarriage support frame (20) is connected directly to said frame (6) with the second portion (22) of said articulated structure by means of the respective end joint (32) in correspondence with said steering sleeve (7), wherein in particular the end joint (32) of said second portion (22) is a revolute joint, connected to an anchoring point (71) of the sleeve (7) specifically dedicated to the purpose.

10. Motor vehicle according to one or more of claims 1 to 8, comprising a steering column (9) inserted in a steering sleeve (7) defined by said frame (6), wherein said forecarriage support frame (20) is connected indirectly to said frame (6), with the second portion (22) of said articulated structure connected by means of the respective end joint (32) to said steering column (9), and wherein said end joint (32) is able to kinematically uncouple said second portion (22) from the rotation movements of said steering column (9) around the steering axis (S-S), in particular wherein said end joint (32) consists of a spherical joint (33) or wherein said end joint (32) consists of a revolute joint (32'), that is connected to an element (90) in turn rotary connected about the steering axis (S-S) to the steering column (9).

11. Motor vehicle according to one or more of the previous claims, wherein said two front wheels (10', 10") are kinematically connected to each other and to the forecarriage support frame (20) by means of a tilting kinematic mechanism (40) which guarantees them to tilt and/or steer.

12. Kit for converting a two-wheeled motor vehicle into a three-wheeled motor vehicle, including two front wheels, wherein said two-wheeled motor vehicle comprises a frame (6) extending from a forecarriage (8) to a rear (12), said conversion kit comprising a forecarriage support frame (20) for a two-wheeled forecarriage, wherein said forecarriage support frame (20) is defined by an articulated structure comprising a first (21) and a second portion (22), which can be connected to each other at their own first ends (21a, 22a) **characterized in that** they can be connected by means of an intermediate joint (30) to said frame (6) at their own second ends (21b, 22b) by means of respective end joints (31, 32),
and wherein said forecarriage support frame (20) is intended to be mounted on said frame (6) such that the intermediate joint (30) and said two end joints (31, 32) each define at least one articulation axes (Y0; Y1, Y2) orthogonal to a centreline plane (MM) of the motor vehicle (1), once mounted said articulated structure forming a structure corresponding kinematically to a three-hinged arch.

13. Kit according to claim 12, wherein said frame (6) defines a platform (5) of said motor vehicle and wherein said forecarriage support frame (20) is connectable directly to said frame (6) with the first portion (21) of said articulated structure by means of the respective end joint (31) in correspondence of said platform (5), wherein in particular the end joint (31) of said first portion (21) is a revolute joint that can be connected to anchoring points (41) of the platform specifically dedicated to the purpose or dedicated to further connect a motor to the frame (6).

14. Kit according to claim 12 or 13, wherein said frame (6) defines a steering sleeve (7) and wherein said forecarriage support frame (20) is connectable directly to said frame (6) with the second portion (22) of said articulated structure by means of the respective end joint (32) in correspondence with said steering sleeve (7), wherein in particular the end joint (32) of said second portion (22) is a revolute joint, that can be connected to an anchoring point (71) of the sleeve (7) specifically dedicated to the purpose.

15. Kit according to one or more of claims 12 to 13, comprising a steering column(9), supported by a steering sleeve (7) defined by said frame (6), wherein said forecarriage support frame (20) is connectable indirectly to said frame (6), with the second portion (22) of said articulated structure connected by means of the respective end joint (32) to said steering column (9), and wherein said end joint (32) is able to kinematically uncouple said second portion (22) from the rotation movements of said steering column (9) around a steering axis (S-S), wherein in particular said end joint (32) consists of a spherical joint (33) or wherein said end joint (32) consists of a revolute joint (32'), that is connected to an element (90) in turn rotary connected about the steering axis (S-S) to the steering column (9).

## Patentansprüche

1. Neigbares Motorfahrzeug mit drei oder vier Rädern, von welchen wenigstens zwei Vorderräder (10', 10") sind, umfassend einen Rahmen (6), welcher sich von einem Vorderwagen (8), welcher ein Paar Vorderräder (10', 10") haltert, zu einem Heck (12) erstreckt, welches eines oder mehrere Hinterräder haltert, wobei der Vorderwagen (8) wiederum einen Vorderwagen-Halterungsrahmen (20) umfasst, wobei der Vorderwagen-Halterungsrahmen (20) durch eine gelenkige Struktur definiert ist, welche einen ersten (21) und einen zweiten Abschnitt (22) umfasst, welche an ihren eigenen ersten Enden (21a, 22a) mittels eines Zwischengelenks (30) miteinander verbunden sind,
**dadurch gekennzeichnet, dass**
sie an ihren eigenen zweiten Enden (21b, 22b) mittels jeweiliger Endgelenke (31, 32) direkt oder indirekt mit dem Rahmen (6) verbunden sind,
und wobei das Zwischengelenk (30) und die beiden Endgelenke (31, 32) jeweils wenigstens eine Gelenksachse (Y0, Y1, Y2) definieren, welche orthogonal zu einer Mittellinienebene (M-M) des Motorfahrzeugs (1) ist, wobei die gelenkige Struktur eine Struktur bildet, welche kinematisch einem Dreigelenkbogen entspricht.

2. Motorfahrzeug nach Anspruch 1, wobei wenigstens eines der Endgelenke (31, 32) ein Drehgelenk ist.

3. Motorfahrzeug nach Anspruch 2, wobei nur eines der Endgelenke (31) ein Drehgelenk ist, während das andere Endgelenk (32) ein Kugelgelenk oder ein zu einem Kugelgelenk äquivalentes Gelenk ist, wobei das Zwischengelenk (30) ein Drehgelenk oder ein Kugelgelenk oder ein zu einem Kugelgelenk äquivalentes Gelenk ist, oder wobei sowohl die Endgelenke (31, 32) als auch das Zwischengelenk (30) Drehgelenke sind.

4. Motorfahrzeug nach einem oder mehreren der vorhergehenden Ansprüche, wobei der Vorderwagen-Halterungsrahmen (20) mit dem Rahmen (6) verbunden ist, um mit dem Rahmen (6) eine geschlossene Struktur in der Nähe des Vorderwagens (8) zu bilden, wobei die Steifigkeit des Rahmens (6) selbst erhöht ist, wobei sich vorzugsweise die geschlossene Struktur in Bezug auf die Mittellinienebene (M-M) des Motorfahrzeugs symmetrisch entwickelt.

5. Motorfahrzeug nach einem oder mehreren der vorhergehenden Ansprüche, wobei sich der erste Abschnitt (21) wenigstens teilweise an einer Unterseite (4) des Motorfahrzeugs in einer ersten vorherrschenden Richtung (X) erstreckt, welche im Wesentlichen horizontal ist.

6. Motorfahrzeug nach einem oder mehreren der vorhergehenden Ansprüche, wobei sich der zweite Abschnitt (22) wenigstens teilweise gemäß einer zweiten vorherrschenden Richtung (Z) erstreckt, welche im Wesentlichen parallel zu einer Lenkachse (S-S) des Motorfahrzeugs (1) ist.

7. Motorfahrzeug nach einem oder mehreren der vorhergehenden Ansprüche, wobei der Rahmen (6) ein Rahmen ist, welcher ebenfalls zum Realisieren eines zweirädrigen Motorfahrzeugs verwendet werden kann.

8. Motorfahrzeug nach einem oder mehreren der vorhergehenden Ansprüche, wobei der Rahmen (6) eine Plattform (5) des Motorfahrzeugs (1) definiert und wobei der Vorderwagen-Halterungsrahmen (20) mittels des jeweiligen Endgelenks (31) in Übereinstimmung mit der Plattform (5) direkt mit dem Rahmen (6) mit dem ersten Abschnitt (21) der gelenkigen Struktur verbunden ist, wobei insbesondere das Endgelenk (31) des ersten Abschnitts (21) ein Drehgelenk ist, welches mit Verankerungspunkten (41) der Plattform verbunden ist, welche insbesondere für den Zweck geeignet sind oder dazu geeignet sind, ferner einen Motor mit dem Rahmen (6) zu verbinden.

9. Motorfahrzeug nach einem oder mehreren der vorhergehenden Ansprüche, wobei der Rahmen (6) eine Lenkungshülse (7) definiert und wobei der Vorderwagen-Halterungsrahmen (20) mittels des jeweiligen Endgelenks (32) in Übereinstimmung mit der Lenkungshülse (7) direkt mit dem Rahmen (6) mit dem zweiten Abschnitt (22) der gelenkigen Struktur verbunden ist, wobei insbesondere das Endgelenk (32) des zweiten Abschnitts (22) ein Drehgelenk ist, welches mit einem Verankerungspunkt (71) der Hülse (7) verbunden ist, welcher insbesondere für den Zweck geeignet ist.

10. Motorfahrzeug nach einem oder mehreren der Ansprüche 1 bis 8, umfassend eine Lenksäule (9), welche in eine Lenkungshülse (7) eingesetzt ist, welche durch den Rahmen (6) definiert ist, wobei der Vorderwagen-Halterungsrahmen (20) indirekt mit dem Rahmen (6) verbunden ist, wobei der zweite Abschnitt (22) der gelenkigen Struktur mittels des jeweiligen Endgelenks (32) mit der Lenksäule (9) verbunden ist, und wobei das Endgelenk (32) dazu in der Lage ist, den zweiten Abschnitt (22) kinematisch von den Drehbewegungen der Lenksäule (9) um die Lenkachse (S-S) zu entkoppeln, wobei insbesondere das Endgelenk (32) aus einem Kugelgelenk (33) gebildet ist oder wobei das Endgelenk (32) aus einem Drehgelenk (32') gebildet ist, welches mit einem Element (90) verbunden ist, welches wiederum drehbar um die Lenkachse (S-S) mit der Lenksäule (9) verbunden ist.

11. Motorfahrzeug nach einem oder mehreren der vorhergehenden Ansprüche, wobei die beiden Vorderräder (10', 10") kinematisch miteinander und mit dem Vorderwagen-Halterungsrahmen (20) mittels eines Neigungskinematikmechanismus (40) verbunden sind, welcher diesen gewährleistet, sich zu neigen und/oder zu lenken.

12. Bausatz zum Umrüsten eines zweirädrigen Motorfahrzeugs in ein dreirädriges Motorfahrzeug, welches zwei Vorderräder umfasst, wobei das zweirädrige Motorfahrzeug einen Rahmen (6) umfasst, welcher sich von einem Vorderwagen (8) zu einem Heck (12) erstreckt, wobei der Umrüstbausatz einen Vorderwagen-Halterungsrahmen (20) für einen zweirädrigen Vorderwagen umfasst, wobei der Vorderwagen-Halterungsrahmen (20) durch eine gelenkige Struktur definiert ist, welche einen ersten (21) und einen zweiten Abschnitt (22) umfasst, welche an ihren eigenen ersten Enden (21a, 22a) miteinander verbunden werden können, **dadurch gekennzeichnet, dass** sie mittels eines Zwischengelenks (30) verbunden werden können, an ihren eigenen zweiten Enden (21b, 22b) mittels jeweiliger Endgelenke (31, 32) mit dem Rahmen (6),
und wobei der Vorderwagen-Halterungsrahmen (20) dazu bestimmt ist, derart an dem Rahmen (6) montiert zu sein, dass das Zwischengelenk (30) und die beiden Endgelenke (31, 32) jeweils wenigstens eine Gelenksachse (Y0, Y1, Y2) definieren, welche orthogonal zu einer Mittellinienebene (M-M) des Motorfahrzeugs (1) ist, wobei, sobald montiert, die gelenkige Struktur eine Struktur bildet, welche kinematisch einem Dreigelenkbogen entspricht.

13. Bausatz nach Anspruch 12, wobei der Rahmen (6) eine Plattform (5) des Motorfahrzeugs definiert und wobei der Vorderwagen-Halterungsrahmen (20) mittels des jeweiligen Endgelenks (31) in Übereinstimmung mit der Plattform (5) direkt mit dem Rahmen (6) mit dem ersten Abschnitt (21) der gelenkigen Struktur verbindbar ist, wobei insbesondere das Endgelenk (31) des ersten Abschnitts (21) ein Drehgelenk ist, welches mit Verankerungspunkten (41) der Plattform verbunden werden kann, welche insbesondere für den Zweck geeignet sind oder dazu geeignet sind, ferner einen Motor mit dem Rahmen (6) zu verbinden.

14. Bausatz nach Anspruch 12 oder 13, wobei der Rahmen (6) eine Lenkungshülse (7) definiert und wobei der Vorderwagen-Halterungsrahmen (20) mittels des jeweiligen Endgelenks (32) in Übereinstimmung mit der Lenkungshülse (7) direkt mit dem Rahmen (6) mit dem zweiten Abschnitt (22) der gelenkigen Struktur verbindbar ist, wobei insbesondere das Endgelenk (32) des zweiten Abschnitts (22) ein Drehgelenk ist, welches mit einem Verankerungspunkt (71) der Hülse (7) verbunden werden kann, welcher insbesondere für den Zweck geeignet ist.

15. Bausatz nach einem oder mehreren der Ansprüche 12 bis 13, umfassend eine Lenksäule (9), welche durch eine Lenkungshülse (7) gehaltert ist, welche durch den Rahmen (6) definiert ist, wobei der Vorderwagen-Halterungsrahmen (20) indirekt mit dem Rahmen (6) verbindbar ist, wobei der zweite Abschnitt (22) der gelenkigen Struktur mittels des jeweiligen Endgelenks (32) mit der Lenksäule (9) verbunden ist, und wobei das Endgelenk (32) dazu in der Lage ist, den zweiten Abschnitt (22) kinematisch von den Drehbewegungen der Lenksäule (9) um eine Lenkachse (S-S) zu entkoppeln, wobei insbesondere das Endgelenk (32) aus einem Kugelgelenk (33) gebildet ist oder wobei das Endgelenk (32) aus einem Drehgelenk (32') gebildet ist, welches mit einem Element (90) verbunden ist, welches wiederum drehbar um die Lenkachse (S-S) mit der Lenksäule (9) verbunden ist.

## Revendications

1. Véhicule automobile basculant à trois ou quatre roues, dont au moins deux roues avant (10', 10"), comprenant un cadre (6) s'étendant d'un avant-train (8), qui supporte une paire de roues avant (10', 10"), à un arrière-train (12), qui supporte une ou plusieurs roues arrière, ledit avant-train (8) comprenant à son tour un cadre de support d'avant-train (20),
dans lequel ledit cadre de support d'avant-train (20) est défini par une structure articulée comprenant une première (21) et une seconde portion (22), qui sont connectées l'une à l'autre au niveau de leurs propres premières extrémités (21a, 22a) au moyen d'une articulation intermédiaire (30), **caractérisées en ce qu'**elles sont connectées directement ou indirectement audit cadre (6) au niveau de leurs propres secondes extrémités (21b, 22b) au moyen d'articulations d'extrémité (31, 32) respectives,
et dans lequel ladite articulation intermédiaire (30) et lesdites deux articulations d'extrémité (31, 32) définissent chacune au moins un axe d'articulation (Y0, Y1, Y2) orthogonal à un plan médian (M-M) dudit véhicule automobile (1), ladite structure articulée formant une structure correspondant cinématiquement à une arche à trois articulations.

2. Véhicule automobile selon la revendication 1, dans lequel au moins l'une desdites articulations d'extrémité (31, 32) est une liaison pivot.

3. Véhicule automobile selon la revendication 2, dans lequel seule l'une desdites articulations d'extrémité (31) est une liaison pivot, tandis que l'autre articulation d'extrémité (32) est une liaison sphérique ou une articulation équivalent à une liaison sphérique, l'articulation intermédiaire (30) étant une liaison pivot ou sphérique ou une liaison équivalent à une liaison sphérique, ou dans lequel les deux dites articulations d'extrémité (31, 32) et l'articulation intermédiaire (30) sont des liaisons pivots.

4. Véhicule automobile selon une ou plusieurs des revendications précédentes, dans lequel ledit cadre de support d'avant-train (20) est connecté audit cadre (6) de façon à former avec ledit cadre (6) une structure fermée près de l'avant-train (8), augmentant la rigidité du cadre (6) lui-même, dans lequel de préférence ladite structure fermée se développe symétriquement par rapport au plan médian (M-M) du véhicule automobile.

5. Véhicule automobile selon une ou plusieurs des revendications précédentes, dans lequel ladite première portion (21) s'étend au moins en partie sur un fond (4) du véhicule automobile dans une première direction dominante (X) qui est sensiblement horizontale.

6. Véhicule automobile selon une ou plusieurs des revendications précédentes, dans lequel ladite seconde portion (22) s'étend au moins en partie selon une seconde direction dominante (Z) sensiblement parallèle à un axe de direction (S-S) dudit véhicule automobile (1).

7. Véhicule automobile selon une ou plusieurs des revendications précédentes, dans lequel ledit cadre (6) est un cadre qui peut également être utilisé pour réaliser un véhicule automobile à deux roues.

8. Véhicule automobile selon une ou plusieurs des revendications précédentes, dans lequel ledit cadre (6) définit une plateforme (5) dudit véhicule automobile (1) et dans lequel ledit cadre de support d'avant-train (20) est connecté directement audit cadre (6) avec la première portion (21) de ladite structure articulée au moyen de l'articulation d'extrémité (31) respective en correspondance avec ladite plateforme (5), dans lequel en particulier l'articulation d'extrémité (31) de ladite première portion (21) est une liaison pivot, connectée à des points d'ancrage (41) de la plateforme spécifiquement dédiée à cette fin ou dédiée à la connexion supplémentaire d'un moteur au cadre (6).

9. Véhicule automobile selon une ou plusieurs des revendications précédentes, dans lequel ledit cadre (6) définit un manchon de direction (7) et dans lequel ledit cadre de support d'avant-train (20) est connecté directement audit cadre (6) avec la seconde portion (22) de ladite structure articulée au moyen de l'articulation d'extrémité (32) respective en correspondance avec ledit manchon de direction (7), dans lequel en particulier l'articulation d'extrémité (32) de ladite seconde portion (22) est une liaison pivot, connectée à un point d'ancrage (71) du manchon (7) spécifiquement dédié à cette fin.

10. Véhicule automobile selon une ou plusieurs des revendications 1 à 8, comprenant une colonne de direction (9) insérée dans un manchon de direction (7) défini par ledit cadre (6), dans lequel ledit cadre de support d'avant-train (20) est connecté indirectement audit cadre (6), avec la seconde portion (22) de ladite structure articulée connectée au moyen de l'articulation d'extrémité (32) respective à ladite colonne de direction (9), et dans lequel ladite articulation d'extrémité (32) est apte à découpler cinématiquement ladite seconde portion (22) des mouvements de rotation de ladite colonne de direction (9) autour de l'axe de direction (S-S), en particulier dans lequel ladite articulation d'extrémité (32) est constituée d'une liaison sphérique (33) ou dans lequel ladite articulation d'extrémité (32) est constituée d'une liaison pivot (32'), qui est connectée à un élément (90) à son tour connecté en rotation autour de l'axe de direction (S-S) à la colonne de direction (9).

11. Véhicule automobile selon une ou plusieurs des revendications précédentes, dans lequel lesdites deux roues avant (10', 10") sont cinématiquement connectées l'une à l'autre et au cadre de support d'avant-train (20) au moyen d'un mécanisme cinématique de basculement (40) qui leur garantit un basculement et/ou une direction.

12. Kit pour convertir un véhicule automobile à deux roues en un véhicule automobile à trois roues, comportant deux roues avant, dans lequel ledit véhicule automobile à deux roues comprend un cadre (6) s'étendant d'un avant-train (8) à un arrière-train (12), ledit kit de conversion comprenant un cadre de support d'avant-train (20) pour un avant-train à deux roues, dans lequel ledit cadre de support d'avant-train (20) est défini par une structure articulée comprenant une première (21) et une seconde portion (22), qui peuvent être connectées l'une à l'autre au niveau de leurs propres premières extrémités (21a, 22a) **caractérisées en ce qu'**elles peuvent être connectées au moyen d'une articulation intermédiaire (30) audit cadre (6) au niveau de leurs propres secondes extrémités (21b, 22b) au moyen d'articulations d'extrémité (31, 32) respectives,
et dans lequel ledit cadre de support d'avant-train (20) est destiné à être monté sur ledit cadre (6) de telle manière que l'articulation intermédiaire (30) et lesdites deux articulations d'extrémité (31, 32) définissent chacun au moins un axe d'articulation (Y0; Y1, Y2) orthogonal à un plan médian (MM) du véhicule automobile (1), une fois montée ladite structure articulée formant une structure correspondant cinématiquement à une arche à trois articulations.

13. Kit selon la revendication 12, dans lequel ledit cadre (6) définit une plateforme (5) dudit véhicule automobile et dans lequel ledit cadre de support d'avant-train (20) peut être connecté directement audit cadre (6) avec la première portion (21) de ladite structure articulée au moyen de l'articulation d'extrémité (31) respective en correspondance avec ladite plateforme (5), dans lequel en particulier l'articulation d'extrémité (31) de ladite première portion (21) est une liaison pivot qui peut être connecté à des points d'ancrage (41) de la plateforme spécifiquement dédiés à cette fin ou dédiés à la connexion supplémentaire d'un moteur au cadre (6).

14. Kit selon la revendication 12 ou 13, dans lequel ledit cadre (6) définit un manchon de direction (7) et dans lequel ledit cadre de support d'avant-train (20) peut être connecté directement audit cadre (6) avec la seconde portion (22) de ladite structure articulée au moyen e l'articulation d'extrémité (32) respective en correspondance avec ledit manchon de direction (7), dans lequel en particulier l'articulation d'extrémité (32) de ladite seconde portion (22) est une liaison pivot, qui peut être connectée à un point d'ancrage (71) du manchon (7) spécifiquement dédié à cette fin.

15. Kit selon une ou plusieurs des revendications 12 à 13, comprenant une colonne de direction (9), supportée par un manchon de direction (7) défini par ledit cadre (6), dans lequel ledit cadre de support d'avant-train (20) peut être connecté indirectement audit cadre (6), avec la seconde portion (22) de ladite structure articulée connectée au moyen de l'articulation d'extrémité (32) respective à ladite colonne de direction (9), et dans lequel ladite articulation d'extrémité (32) est apte à découpler cinématiquement ladite seconde portion (22) des mouvements de rotation de ladite colonne de direction (9) autour d'un axe de direction (S-S), dans lequel en particulier ladite articulation d'extrémité (32) est constituée d'une liaison sphérique (33) ou dans lequel ladite articulation d'extrémité (32) est constituée d'une liaison pivot (32'), qui est connectée à un élément (90) à son tour connecté en rotation autour de l'axe de direction (S-S) à la colonne de direction (9).
